# EUROPEAN PATENT SPECIFICATION

(11) **EP 2 796 718 B1**
(45) Date of publication and mention of the grant of the patent: **04.01.2017**
(21) Application number: 14163485.7
(22) Date of filing: 04.04.2014
(51) Int. Cl.: F04B 39/10, F04B 39/12, F04B 39/14, F16J 15/16, F16J 15/46

(54) **Compressor**
Verdichter
Compresseur

(30) Priority: 23.04.2013 JP 2013090654
(43) Date of publication of application: 29.10.2014
(73) Proprietor: Kabushiki Kaisha Kobe Seiko Sho (Kobe Steel, Ltd.), Kobe-shi, Hyogo 651-8585 (JP)
(72) Inventor: Nagura, Kenji, Takasago-shi,, Hyogo 676-8670 (JP); Hirai, Toshio, Takasago-shi,, Hyogo 676-8670 (JP); Takagi, Hitoshi, Takasago-shi,, Hyogo 676-8670 (JP)
(74) Representative: TBK

(56) References cited:
- EP-A1- 1 950 472
- JP-A- H08 303 591
- US-A- 5 947 697
- US-A1- 2001 032 951
- US-A1- 2006 189 208
- US-A1- 2011 210 515
- US-A1- 2013 092 023

## Description

The present invention relates to a compressor according to the preamble of claim 1, the features of which are e.g. known from document US 5 947 697 A.

Hitherto, there has been known a compressor that compresses a gas to a high pressure.

For example, a compressor disclosed in JP 2009-062871 A is a compressor that compresses a hydrogen gas to an extreme pressure, and includes a piston (a plunger) that is formed in a straight rod shape, a cylinder that includes a hole portion into which the piston is inserted so as to be movable in a reciprocating manner in the axial direction, and a cylinder head (a head cover) that is attached to the front end of the cylinder head and includes therein a suction valve and a discharge valve. A compression chamber is formed in an area near the front end of the piston inside the hole portion of the cylinder. The cylinder head is provided with an internal space that communicates with the compression chamber and a suction port and a discharge port that communicate with the internal space. Further, the internal space of the cylinder head is provided with a valve that includes a suction valve and a discharge valve. When the piston moves toward the base end of the cylinder head, a gas is suctioned into the compression chamber through the suction port and the suction valve, and the gas suctioned into the compression chamber is compressed by the movement of the piston toward the front end of the cylinder head. The compressed gas is discharged from the compression chamber to the outside through the discharge valve and the discharge port.

In JP H08-303591 A, an extreme-pressure fluid sealing device is provided in each of a fixed portion and a sliding portion of a cylinder end of a plunger pump. In the extreme-pressure fluid sealing device that is provided in the fixed portion, a penta ring that is formed of urethane rubber so as to have a pentagonal section, a packing ring that is formed of high-molecular polyethylene, and a backup ring that is formed of copper so as to have a trapezoid end surface are disposed from a high-pressure portion in an annular gap formed between an inner surface of a cylinder and an outer peripheral surface of a cylinder inner member of an adapter having an end fixed to the cylinder. In the extreme-pressure fluid sealing device provided in the sliding portion, a penta ring that is formed of urethane rubber so as to have a pentagonal end surface, a packing ring that is formed of high-molecular polyethylene, a backup ring that is formed of copper so as to have a trapezoid end surface, and a bottom ring that is formed of steel are disposed from a high-pressure portion in an annular gap formed between the inner surface of the cylinder and an outer peripheral surface of a plunger.

Further arrangements of sealing devices comprising a sealing ring and a backup ring are disclosed in documents US 2013/092023 A1, EP 1 950 472 A1, US 2011/210515 A1.

In order that the suction valve and the discharge valve are attached to and detached from the cylinder head, there is a case in which the compressor includes a suction-side opening portion that is used to insert the attached to and detached from the cylinder head, there is a case in which the compressor includes a suction-side opening portion that is used to insert the suction valve into the internal space of the cylinder head and a discharge-side opening portion that is used to insert the discharge valve into the internal space of the cylinder head. In this case, a corresponding valve is inserted into the internal space of the cylinder head through each opening portion, and a valve pressing portion is inserted into the cylinder head through the opening portion so as to prevent the valve from slipping off from the opening portion. Further, in such a configuration, since there is a concern in which a gas may leak from the internal space of the cylinder head to the outside through a gap between the inner surface of the cylinder head and the outer peripheral surface of the insertion portion inside the cylinder head of the valve pressing portion, an O-ring as a sealing member is fitted to the outside of the insertion portion of the valve pressing portion so as to suppress the leakage of the gas. The O-ring is attached into the annular groove portion provided in the outer peripheral surface of the insertion portion, and is disposed while contacting the inner surface of the cylinder head.

However, in this configuration, the O-ring is damaged by the repeated gas compressing operation in the compressor, and hence there is a concern in which a gas may leak from the internal space of the cylinder head.

Specifically, when the gas is compressed in the compression chamber, the pressure of the internal space of the cylinder head also becomes a high pressure, and hence a pressure difference occurs surface of the cylinder head and the outer peripheral surface of the portion located near the opening portion of the groove portion of the insertion portion from the inside of the annular groove portion. Whenever the gas is compressed repeatedly, the O-ring is deformed so as to enter the gap, so that the O-ring is damaged. As a result, the gap between the outer peripheral surface of the insertion portion of the valve pressing portion and the inner surface of the cylinder head is sealed incompletely, and hence a gas leaks from the internal space of the cylinder head.

In JP H08-303591 A, the number of components such as ring members like the penta ring or the packing ring is large, and hence the extreme-pressure fluid sealing device may not be easily assembled. Further, since the side surfaces of the ring members need to contact each other, the ring members need to be provided with high precision.

The present invention is made to solve the above-described problems, and the object thereof is to provide a compressor capable of preventing the leakage of a gas from an internal space of a cylinder head.

The object of the invention is achieved by a compressor according to claim 1. Advantageous embodiments are carried out according to the dependent claims.

According to the present invention, a compressor that compresses a gas includes: a cylinder that has a gas introduction compression chamber formed inside a front end thereof; a piston that is inserted into the cylinder and compresses a gas introduced into the compression chamber; a cylinder head that is attached to the front end of the cylinder and includes an internal space communicating with the compression chamber; a check valve that is provided in the internal space of the cylinder head; a valve pressing portion that presses the check valve so that the check valve does not slip off through an opening of the cylinder head head that is attached to the front end of the cylinder and includes an internal space communicating with the compression chamber; a check valve that is provided in the internal space of the cylinder head; a valve pressing portion that presses the check valve so that the check valve does not slip off through an opening of the cylinder head connected to the internal space; and a head sealing portion that suppresses the leakage of the gas from the internal space of the cylinder head, wherein the valve pressing portion includes a valve pressing insertion portion that is inserted into the internal space of the cylinder head through the opening, wherein an annular valve pressing groove portion is formed in an outer peripheral surface of the valve pressing insertion portion, and wherein the head sealing portion includes a valve pressing O-ring that is attached into the valve pressing groove portion and seals a gap between the valve pressing insertion portion and an inner surface forming the internal space in the cylinder head, and a valve pressing backup ring that is disposed at a position on the side of the opening with respect to the valve pressing O-ring inside the valve pressing groove portion and suppresses the movement of the valve pressing O-ring toward the opening.

In the compressor, since the valve pressing backup ring that suppresses the movement of the valve pressing O-ring toward the opening of the cylinder head is provided inside the valve pressing groove portion provided in the outer peripheral surface of the valve pressing insertion portion, the valve pressing backup ring may suppress the valve pressing O-ring from being deformed to enter the narrow gap between the portion located on the opening side with respect to the valve pressing groove portion in the outer peripheral surface of the valve pressing insertion portion and the inner surface forming the internal space of the cylinder head even when a large pressure difference between the internal space of the cylinder head and the external space thereof acts on the valve pressing O-ring when the gas is compressed inside the compression chamber so that the pressure of the internal space of the cylinder head becomes a high pressure. As a result, it is possible to prevent the damage of the valve pressing O-ring caused when the valve pressing O-ring enters the gap and to prevent the leakage of the gas from the internal space of the cylinder head.

In the compressor, a side surface portion located on the side of the opening of the cylinder head in an inner surface of the valve pressing groove portion and an end surface of the valve pressing backup ring facing the side surface portion may be all formed in a tapered shape that increase in diameter as it goes toward the opening of the cylinder head.

According to this configuration, the tapered end surface of the valve pressing backup ring is pressed by the tapered side surface portion inside the valve pressing groove portion due to a pressure difference between the internal space of the cylinder head and the external space thereof, and hence the valve pressing backup ring is widened outward in the radial direction along the tapered side surface portion inside the valve pressing groove portion, thereby blocking the gap between the inner surface of the cylinder head and the portion located on the opening side with respect to the valve pressing groove portion in the outer peripheral surface of the valve pressing insertion portion. For this reason, it is possible to further reliably prevent the valve pressing O-ring from entering the gap. As a result, it is possible to further reliably prevent the leakage of the gas from the internal space of the cylinder head.

In the compressor, the valve pressing insertion portion includes a valve pressing insertion body in which an annular valve pressing groove concave portion is formed in an outer peripheral surface of a front end thereof and a valve pressing adapter which is separably coupled to the front end of the valve pressing insertion body, and the valve pressing adapter includes a valve pressing adapter outer peripheral portion that forms the valve pressing groove portion by covering the valve pressing groove concave portion from the front end side of the valve pressing insertion body while the valve pressing adapter is coupled to the front end of the valve pressing insertion body.

According to this configuration, the valve pressing O-ring and the valve pressing backup ring may be attached into the annular valve pressing groove portion in an order that the valve pressing adapter is separated from the valve pressing insertion body, the valve pressing backup ring and the valve pressing O-ring are attached to the valve pressing groove concave portion, and the valve pressing adapter is coupled to the front end of the valve pressing insertion body. For this reason, the valve pressing O-ring and the valve pressing backup ring may be easily attached into the valve pressing groove portion without extending the valve pressing O-ring and the valve pressing backup ring outward in the radial direction.

In this case, one of the valve pressing insertion body and the valve pressing adapter may include a valve pressing and coupling concave portion, and the other of the valve pressing insertion body and the valve pressing adapter may include a valve pressing and coupling convex portion that is press-inserted into the valve pressing and coupling concave portion.

According to this configuration, the valve pressing insertion body and the valve pressing adapter may be coupled to each other by a large coupling force by press-inserting the valve pressing and coupling convex portion into the valve pressing and coupling concave portion. For this reason, it is possible to prevent the valve pressing adapter from slipping off from the valve pressing insertion body in a state before the valve pressing insertion portion is press-inserted into the internal space of the cylinder head.

Furthermore, in this case, the valve pressing adapter may include a valve pressing adapter penetration hole that penetrates the valve pressing adapter in the press-insertion direction of the valve pressing and coupling convex portion with respect to the valve pressing and coupling concave portion, and at least a part of the valve pressing adapter penetration hole may be provided with a female screw portion.

According to this configuration, the valve pressing adapter may be separated from the valve pressing insertion body in a manner such that a separation bolt is threaded into the female screw portion of the valve pressing adapter penetration hole, the front end of the bolt collides with the valve pressing insertion body, and the bolt is further threaded. For this reason, the maintenance or the replacement of the valve pressing O-ring and the valve pressing backup ring may be performed by easily separating the valve pressing adapter from the valve pressing insertion body even when the valve pressing and coupling convex portion is press-inserted into the valve pressing and coupling concave portion so that the valve pressing insertion body and the valve pressing adapter are strongly coupled to each other.

Further, in this case, a space inside the valve pressing adapter penetration hole may form a part of a gas circulation path connected to the compression chamber.

According to this configuration, since the space inside the valve pressing adapter penetration hole may be used as a part of the circulation path for supplying the gas to the compression chamber, it is possible to prevent an increase in the size of the valve pressing adapter and to simplify the manufacturing process of the valve pressing adapter compared to the case where the valve pressing adapter penetration hole is formed in the valve pressing adapter so as to be separated from the gas circulation path.

In the compressor, the front end of the cylinder may be provided with a cylinder opening, the compressor may further include a cylinder sealing portion that suppresses the leakage of the gas from the compression chamber, the cylinder head may include a head inserting portion that is inserted into the cylinder through the cylinder opening, an annular head groove portion may be formed in an outer peripheral surface of the head inserting portion, and the cylinder sealing portion may include a head O-ring that is attached into the head groove portion and seals a gap between the head inserting portion and an inner surface forming a space for inserting the head inserting portion in the cylinder and a head backup ring that is disposed at a position near the cylinder opening of the head O-ring inside the head groove portion and suppresses the movement of the head O-ring toward the cylinder opening.

In this configuration, since the head backup ring that suppresses the movement of the head O-ring toward the cylinder opening is provided inside the head groove portion provided in the outer peripheral surface of the head inserting portion, the head backup ring may suppress a part of the head O-ring from being deformed to enter the narrow gap between the inner surface of the cylinder and the portion located the cylinder opening with respect to the head groove portion in the outer peripheral surface of the head inserting portion even when a large pressure difference between the compression chamber and the external space acts on the head O-ring when the gas is compressed inside the compression chamber. As a result, it is possible to prevent the damage of the head O-ring caused when the head O-ring enters the gap and to prevent the leakage of the gas from the compression chamber.

In this case, a side surface portion located near the cylinder opening in an inner surface of the head groove portion and an end surface of the head backup ring facing the side surface portion may be all formed in a tapered shape that increases in diameter as it goes toward the cylinder opening.

In this configuration, the head backup ring may further reliably prevent the head O-ring from entering the gap between the inner surface of the cylinder and the portion located near the cylinder opening with respect to the head groove portion in the outer peripheral surface of the head inserting portion due to the same reason as that of the configuration in which the end surface of the valve pressing backup ring and the side surface portion inside the valve pressing groove portion are formed in a tapered shape. As a result, it is possible to further reliably prevent the leakage of the gas from the compression chamber.

In the configuration in which the cylinder head includes the head inserting portion, the head inserting portion may include a head inserting body in which an annular head groove concave portion is formed in an outer peripheral surface of a front end thereof and a head adapter which is separably coupled to the front end of the head inserting body, and the head adapter may include a head adapter outer peripheral portion that forms the head groove portion by covering the head groove concave portion from the front end side of the head inserting body while the head adapter is coupled to the front end of the head inserting body.

According to this configuration, the head O-ring and the head backup ring may be easily attached into the head groove portion due to the same reason as that of the configuration in which the valve pressing groove concave portion is formed in the outer peripheral surface of the front end of the valve pressing insertion body and the valve pressing adapter includes the valve pressing adapter outer peripheral portion forming the valve pressing groove portion by covering the valve pressing groove concave portion from the front end side of the valve pressing insertion body.

In this case, the outer diameter of the head adapter and the inner diameter of the head adapter insertion portion of the cylinder may be larger than the inner diameter of the compression chamber.

In this configuration, since the inner diameter of the head adapter insertion portion of the cylinder is larger than the inner diameter of the compression chamber, a step is formed between the inner surface of the compression chamber and the inner surface of the head adapter insertion portion of the cylinder. For this reason, for example, when the piston is retracted toward the base end of the cylinder so that the pressure of the compression chamber becomes a low pressure, it is possible to prevent a problem in which the head adapter is separated from the head inserting body and enters the compression chamber by the step between the inner surface of the compression chamber and the inner surface of the head adapter insertion portion.

In the configuration in which the head inserting portion includes the head inserting body and the head adapter, one of the head inserting body and the head adapter may include a head coupling concave portion, and the other of the head inserting body and the head adapter may include a head coupling convex portion that is press-inserted into the head coupling concave portion.

According to this configuration, the head inserting body and the head adapter may be coupled to each other by a strong coupling force by press-inserting the head coupling convex portion into the head coupling concave portion. For this reason, it is possible to prevent the head adapter from being separated from the head inserting body in a state

Furthermore, in this case, a space inside the head adapter penetration hole may form a part of a gas circulation path connected to the compression chamber.

According to this configuration, since the space inside the head adapter penetration hole may be used as a part of the circulation path for supplying the gas into the compression chamber, it is possible to prevent an increase in the size of the head adapter and to simplify the manufacturing process of the head adapter.

As described above, according to the present invention, it is possible to provide the compressor capable of preventing the leakage of the gas from the internal space of the cylinder head.
FIG. 1 is a longitudinal sectional view illustrating a compressor according to an embodiment of the present invention.
FIG. 2 is a partially enlarged view illustrating a front end of a cylinder of the compressor illustrated in FIG. 1 and a portion near a cylinder head.
FIG. 3 is a further enlarged view illustrating the vicinity of a head inserting portion of the cylinder head of FIG. 2.
FIG. 4 is a further enlarged view illustrating the vicinity of a suction valve pressing and inserting portion of FIG. 2.
FIG. 5 is a further enlarged view illustrating the vicinity of a discharge valve pressing and inserting portion of FIG. 2.
FIG. 6 is a cross-sectional view taken along the direction perpendicular to the axial direction of a head backup ring according to the embodiment of the present invention.
FIG. 7 is a partially enlarged view illustrating a state where the head backup ring blocks a gap between an outer peripheral surface of a head inserting portion and an inner surface of a cylinder fitting object portion.
FIG. 8 is a view corresponding to FIG. 7 illustrating the vicinity of a head backup ring according to a modified example of the embodiment of the present invention.

Hereinafter, an embodiment of the present invention will be described by referring to the drawings.

A compressor according to an embodiment of the present invention is a reciprocation type compressor that compresses a hydrogen gas by moving a piston 2 to be described later in a reciprocating manner and is particularly used to compress a hydrogen gas in a hydrogen station, which charges a hydrogen gas to a fuel-cell vehicle or the like, to an extreme pressure (several tens to several hundreds of MPa).

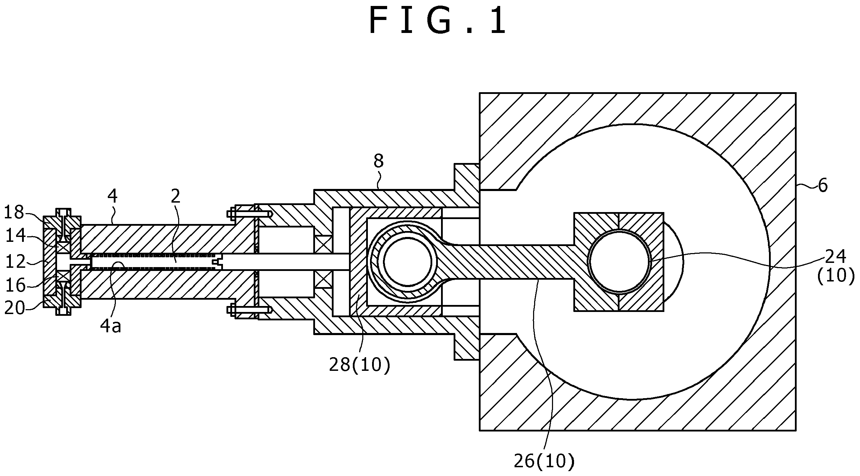

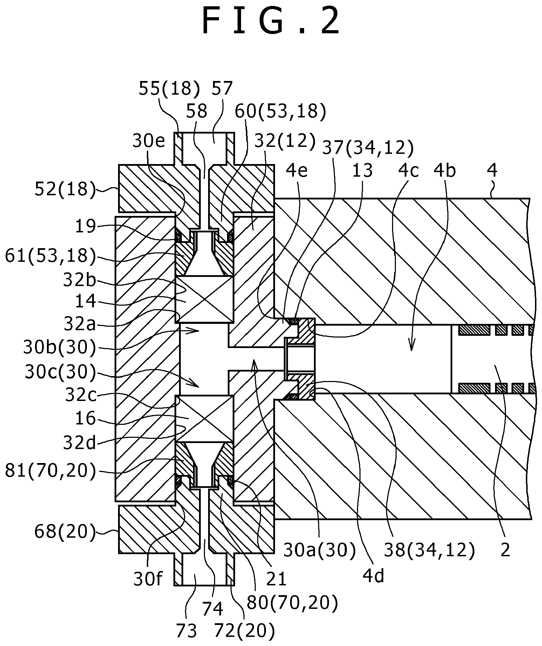

As illustrated in Fig. 1, the compressor according to this embodiment includes the piston 2, a cylinder 4, an accommodation portion 6, a cross guide 8, a driving device 10, a cylinder head 12, a cylinder sealing portion 13 (see FIG. 2), a suction valve 14, a discharge valve 16, a suction valve pressing portion 18, a suction-side head sealing portion 19 (see FIG. 2), a discharge valve pressing portion 20, and a discharge-side head sealing portion 21 (see FIG. 2).

Hereinafter, an embodiment of the present invention will be described by referring to the drawings.

A compressor according to an embodiment of the present invention is a reciprocation type compressor that compresses a hydrogen gas by moving a piston 2 to be described later in a reciprocating manner and is particularly used to compress a hydrogen gas in a hydrogen station, which charges a hydrogen gas to a fuel-cell vehicle or the like, to an extreme pressure (several tens to several hundreds of MPa).

As illustrated in Fig. 1, the compressor according to this embodiment includes the piston 2, a cylinder 4, an accommodation portion 6, a cross guide 8, a driving device 10, a cylinder head 12, a cylinder sealing portion 13 (see FIG. 2), a suction valve 14, a discharge valve 16, a suction valve pressing portion 18, a suction-side head sealing portion 19 (see FIG. 2), a discharge valve pressing portion 20, and a discharge-side head sealing portion 21 (see FIG. 2).

The piston 2 is a rod-shaped member, and is inserted into the cylinder 4. The piston 2 moves in a reciprocating manner so as to compress a hydrogen gas introduced into a compression chamber 4b (see FIG. 2) inside the cylinder 4.

The cylinder 4 is a substantially cylindrical member. The cylinder 4 is provided with a hole portion 4a that extends in the axial direction of the cylinder 4, and the piston 2 is inserted into the hole portion 4a so as to be movable in a reciprocating manner in the axial direction. The compression chamber 4b (see FIG. 2) into which the hydrogen gas is introduced is provided inside the front end of the cylinder 4, that is, an area on the front end side of the piston 2 in the hole portion 4a. Further, a cylinder fitting object portion 4c is provided in a portion on the front end side of the compression chamber 4b in the cylinder 4. The cylinder fitting object portion 4c communicates with the compression chamber 4b, and has an inner diameter larger than the inner diameter of the compression chamber 4b. For this reason, a step 4d is formed between the inner surface of the cylinder fitting object portion 4c and the inner surface of the compression chamber 4b. Further, the cylinder fitting object portion 4c is opened by a cylinder opening 4e that is formed in the front end surface of the cylinder 4.

The accommodation portion 6 is formed in a hollow shape as illustrated in FIG. 1, accommodates a crank shaft 24 to be described later of the driving device 10, and supports the crank shaft 24 so that the crank shaft 24 is rotatable.

The cross guide 8 is attached to the accommodation portion 6 while extending laterally from one side surface of the accommodation portion 6. The cross guide 8 is used to guide the movement of a cross head 28 to be described later of the driving device 10. The end of the cross guide 8 located at the opposite side to the accommodation portion 6 is connected to the base end (the end opposite to the front end) of the cylinder 4.

The driving device 10 includes a power transmission mechanism (not illustrated) that is disposed outside the accommodation portion 6, the crank shaft 24 that is accommodated inside the accommodation portion 6 and is rotated by the power transmitted from the power transmission mechanism, a connecting rod 26 of which one end is attached to the crank shaft 24, and the cross head 28 that is attached to the other end of the connecting rod 26 and is coupled to the base end of the piston 2. The connecting rod 26 extends from the inside of the accommodation portion 6 toward the cross guide 8, and the cross head 28 is accommodated inside the cross guide 8 while being movable in a reciprocating manner in the horizontal direction. The connecting rod 26 and the cross head 28 convert the rotational movement of the crank shaft 24 into the linear reciprocating movement, and transmit the linear reciprocating movement to the piston 2. Accordingly, the driving device 10 moves the piston 2 in a reciprocating manner in the axial direction.

The cylinder head 12 is separately attached to the front end of the cylinder 4. As illustrated in FIG. 2, the cylinder head 12 includes an internal space 30 that communicates with the compression chamber 4b. The internal space 30 includes a communication path 30a, a suction-side space 30b, and a discharge-side space 30c. The communication path 30a is connected to the compression chamber 4b, and extends from the end of the compression chamber 4b of the front end of the cylinder 4 toward the opposite side to the piston 2. The suction-side space 30b is connected to the end of the communication path 30a opposite to the compression chamber 4b, and extends toward one side (the upper side) in a direction perpendicular to the axial direction of the cylinder 4 (the extension direction of the hole portion 4a). The discharge-side space 30c extends toward the other side (the lower side) in a direction perpendicular to the axial direction of the cylinder 4. Further, the cylinder head 12 includes a head body 32 that contacts the front end surface of the cylinder 4 and a head inserting portion 34 that protrudes from the end surface of the head body 32 on the cylinder 4 side and is inserted into the cylinder fitting object portion 4c through the cylinder opening 4e.

The head body 32 is fastened to the cylinder 4 by a fastening member (not illustrated) while contacting the front end surface of the cylinder 4. The inside of the head body 32 is provided with the suction-side space 30b, the discharge-side space 30c, and a portion of the communication path 30a from the end opposite to the compression chamber 4b to the intermediate portion. The suction-side space 30b and the discharge-side space 30c are formed so as to be symmetrical to each other. The end surface (the upper surface) of the head body 32 provided with the suction-side space 30b is provided with a suction-side head opening 30e as an opening of the suction-side space 30b, and the end surface (the lower surface) of the head body 32 provided with the discharge-side space 30c is provided with a discharge-side head opening 30f as an opening of the discharge-side space 30c.

In the inner surface of the head body 32 forming the suction-side space 30b, the inner diameter of the range from the suction-side head opening 30e to a predetermined length is larger than the inner diameter of the remaining range, and a step 32a is formed between both ranges. A suction-side fitting object portion 32b is formed by a portion from the suction-side head opening 30e to the step 32a in the suction-side space 30b. Further, in the inner surface of the head body 32 forming the discharge-side space 30c, the inner diameter of the range from the discharge-side head opening 30f to a predetermined length is larger than the inner diameter of the remaining range, and a step 32c is formed between both ranges. A discharge-side fitting object portion 32d is formed by a portion from the discharge-side head opening 30f to the step 32c in the discharge-side space 30c.

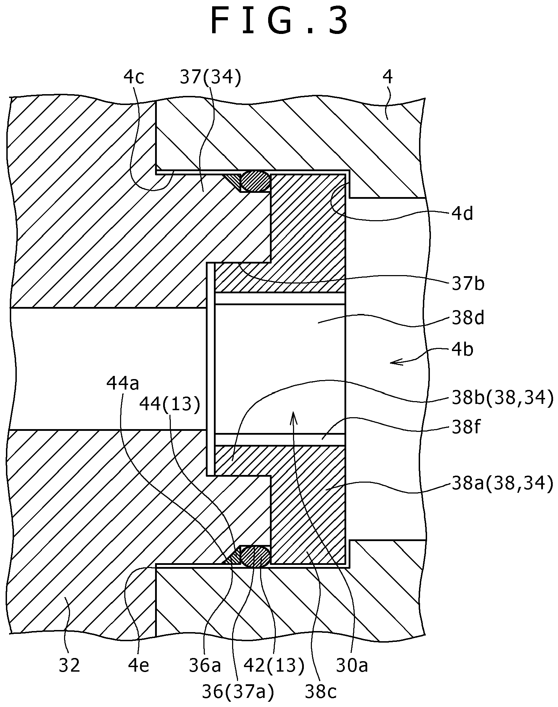

The head inserting portion 34 is formed in a substantially columnar shape that has an outer diameter larger than the inner diameter of the compression chamber 4b and is slightly smaller than the inner diameter of the cylinder fitting object portion 4c. The outer peripheral surface of the head inserting portion 34 is provided with an annular head groove portion 36 (see FIG. 3) that extends in the circumferential direction of the outer peripheral surface. In the inner surface of the head groove portion 36, a side surface portion 36a that is located at the cylinder opening 4e side (at the opposite side to the compression chamber 4b) is formed in a tapered shape that increases in diameter as it goes toward the cylinder opening 4e. The head inserting portion 34 includes a head inserting body 37 and a head adapter 38. Inside the head adapter 38, a portion extending from the intermediate portion of the communication path 30a in the longitudinal direction to the end connected to the compression chamber 4b is formed so as to extend in the axial direction of the head adapter 38.

The head inserting body 37 is a portion that is integrally formed with the head body 32 so as to protrude from the end surface of the cylinder 4 side of the head body 32. The outer peripheral portion of the front end (the end opposite to the head body 32) of the head inserting body 37 is provided with a head groove concave portion 37a as an annular concave portion. Further, the head inserting body 37 includes a head coupling concave portion 37b as a concave portion that is recessed from the front end surface toward the head body 32.

The head adapter 38 is separably coupled to the head inserting body 37 in the axial direction of the head inserting portion 34. The head adapter 38 includes a head adapter body 38a that has an outer diameter equal to the outer diameter of the portion other than the front end provided with the head groove concave portion 37a of the head inserting body 37, and a head coupling convex portion 38b that protrudes from the head adapter body 38a and is press-inserted into the head coupling concave portion 37b. When the head coupling convex portion 38b is press-inserted into the head coupling concave portion 37b, the head adapter 38 is strongly coupled to the head inserting body 37. Further, the outer peripheral portion of the head adapter body 38a forms a head adapter outer peripheral portion 38c. The head adapter outer peripheral portion 38c forms the head groove portion 36 in a manner such that the head groove concave portion 37a is covered from the front end side of the head inserting body 37 while the head adapter 38 is coupled to the front end of the head inserting body 37.

Further, the head adapter 38 includes a head adapter penetration hole 38d that penetrates the head adapter 38 in the press-insertion direction (the axial direction of the head inserting portion 34) of the head coupling convex portion 38b with respect to the head coupling concave portion 37b. The head adapter penetration hole 38d penetrates the head adapter body 38a and the head coupling convex portion 38b. A female screw portion 38f is formed in the entire portion from one end of the head adapter penetration hole 38d to the other end thereof in the axial direction. The space inside the head adapter penetration hole 38d is connected to the compression chamber 4b, and forms a part of the communication path 30a as the circulation path for the hydrogen gas supplied to the compression chamber 4b.

The cylinder sealing portion 13 is used to suppress the leakage of the hydrogen gas from the compression chamber 4b at the front end of the cylinder 4. The cylinder sealing portion 13 includes a head O-ring 42 and a head backup ring 44.

The head O-ring 42 is formed in an annular shape using elastic rubber, and is fitted to the outside of the head inserting portion 34 while being attached into the head groove portion 36. The outer peripheral portion of the head O-ring 42 contacts the inner surface of the cylinder 4 forming the cylinder fitting object portion 4c. The head O-ring 42 is used to seal a gap formed between the outer peripheral surface of the head inserting portion 34 and the inner surface of the cylinder 4 forming the cylinder fitting object portion 4c. By the head O-ring 42, it is possible to suppress the leakage of the hydrogen gas from the compression chamber 4b to the external space through the gap between the outer peripheral surface of the head inserting portion 34 and the inner surface of the cylinder 4.

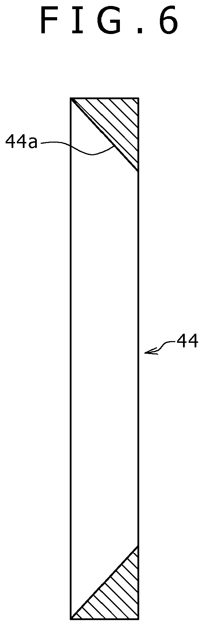

The head backup ring 44 is formed in an annular shape using metal, and is fitted to the outside of the head inserting portion 34 while being disposed at the position on the cylinder opening 4e side (the opposite side to the compression chamber 4b) with respect to the head O-ring 42 inside the head groove portion 36. The head backup ring 44 is used to suppress the movement of the head O-ring 42 toward the cylinder opening 4e. The head backup ring 44 includes an end surface (an inner surface) 44a that faces the side surface portion 36a inside the head groove portion 36, and an end surface 44a is formed in a tapered shape that increases in diameter as it goes toward the cylinder opening 4e (see FIG. 6).

As illustrated in FIG. 2, the suction valve 14 is accommodated inside the suction-side fitting object portion 32b of the head body 32 and is disposed while contacting the step 32a. The suction valve 14 is a check valve that allows the circulation of the hydrogen gas from a suction port 57 to be described later toward the compression chamber 4b (toward the communication path 30a) and suppresses the circulation of the hydrogen gas from the compression chamber 4b toward the suction port 57. The suction valve 14 suppresses the reverse flow of the compressed hydrogen gas toward the suction port 57 when the compressed hydrogen gas is discharged from the compression chamber 4b.

The discharge valve 16 is accommodated inside the discharge-side fitting object portion 32d of the head body 32 and is disposed while contacting the step 32c. The discharge valve 16 is a check valve that allows the circulation of the hydrogen gas from the compression chamber 4b (the communication path 30a) toward ejection discharge port 73 to be described later and suppresses the circulation of the hydrogen gas from the discharge port 73 toward the compression chamber 4b. The discharge valve 16 suppresses the reverse flow of the gas from the outside toward the compression chamber 4b (toward the communication path 30a) through the discharge port 73 when the hydrogen gas is suctioned to the compression chamber 4b.

The suction valve pressing portion 18 is separably attached to the head body 32. The suction valve pressing portion 18 is used to press and fix the suction valve 14 so that the suction valve 14 does not slip off to the outside from the suction-side fitting object portion 32b inside the head body 32 through the suction-side head opening 30e. The suction valve pressing portion 18 includes a suction valve pressing flange 52 that is disposed at the outside of the end surface of the head body 32 provided with the suction-side head opening 30e, and a suction valve pressing and inserting portion 53 that protrudes from the end surface of the suction valve pressing flange 52 near the head body 32 and is inserted into the suction-side fitting object portion 32b through the suction-side head opening 30e.

The suction valve pressing flange 52 is fastened to the head body 32 by a fastening member (not illustrated) while the suction valve 14 is interposed between the front end of the suction valve pressing and inserting portion 53 and the step 32a. Accordingly, the suction valve 14 is fixed to the inside of the suction-side fitting object portion 32b, and the suction valve pressing portion 18 is fixed to the head body 32.

The end surface of the suction valve pressing flange 52 opposite to the head body 32 is provided with a suction-side protrusion portion 55, and the hydrogen gas suction port 57 is formed inside the suction-side protrusion portion 55. The inside of the suction valve pressing flange 52 and the inside of the suction valve pressing and inserting portion 53 are provided with a suction path 58 connected to the suction port 57. The end of the suction path 58 opposite to the suction port 57 is connected to a portion of the suction-side space 30b located on the communication path 30a side in relation to the step 32a through the suction valve 14.

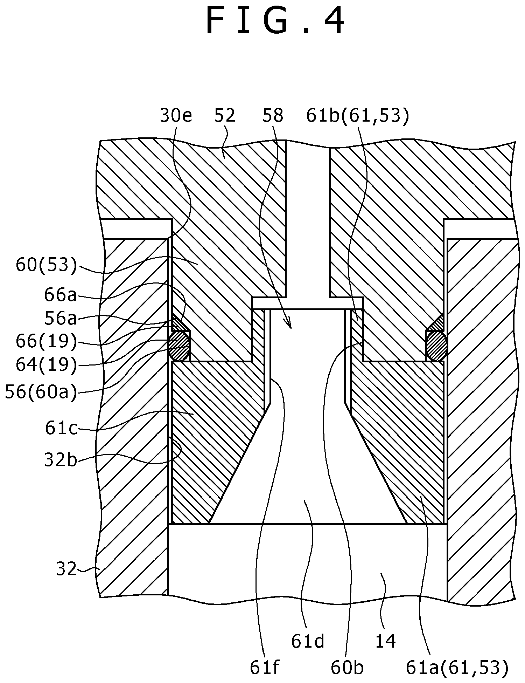

The suction valve pressing and inserting portion 53 is formed in a substantially columnar shape that an outer diameter larger than the diameter of the inner surface of the head body 32 forming a portion located near the communication path 30a in relation to the step 32a of the suction-side space 30b and slightly smaller than the diameter of the inner surface forming the suction-side fitting object portion 32b. The outer peripheral surface of the suction valve pressing and inserting portion 53 is provided with an annular suction valve pressing groove portion 56 (see FIG. 4) that extends in the circumferential direction of the outer peripheral surface. In the inner surface of the suction valve pressing groove portion 56, the side surface portion 56a that is located on the suction-side head opening 30e side is formed in a tapered shape that increases in diameter as it goes toward the suction-side head opening 30e. The suction valve pressing and inserting portion 53 includes a suction valve pressing and inserting body 60 and a suction valve pressing adapter 61.

The suction valve pressing and inserting body 60 is a portion that is integrally formed with the suction valve pressing flange 52 so as to protrude from the end surface of the head body 32 side of the suction valve pressing flange 52. As illustrated in FIG. 4, the outer peripheral portion of the front end (the end opposite to the suction valve pressing flange 52) of the suction valve pressing and inserting body 60 is provided with a concave portion for suction valve pressing groove 60a as an annular concave portion. Further, the suction valve pressing and inserting body 60 includes a concave portion for suction valve pressing portion coupling 60b as a concave portion that is recessed from the front end surface toward the suction valve pressing flange 52.

The suction valve pressing adapter 61 is separably coupled to the suction valve pressing and inserting body 60 in the axial direction of the suction valve pressing and inserting portion 53. The suction valve pressing adapter 61 includes a suction-side adapter body 61a that has an outer diameter equal to the outer diameter of the portion other than the concave portion for suction valve pressing groove 60a of the suction valve pressing, and inserting body 60 and a convex portion for suction valve pressing portion coupling 61b that protrudes from the suction-side adapter body 61a and is press-inserted into the concave portion for suction valve pressing portion coupling 60b. When the convex portion for suction valve pressing portion coupling 61b is press-inserted into the concave portion for suction valve pressing portion coupling 60b, the suction valve pressing adapter 61 is strongly coupled to the suction valve pressing and inserting body 60. Further, a suction-side adapter outer peripheral portion 61c is formed by the outer peripheral portion of the suction-side adapter body 61a. The suction-side adapter outer peripheral portion 61c forms the suction valve pressing groove portion 56 in a manner such that the concave portion for suction valve pressing groove 60a is covered from the front end side of the suction valve pressing and inserting body 60 while the suction valve pressing adapter 61 is coupled to the front end of the suction valve pressing and inserting body 60.

Further, the suction valve pressing adapter 61 is provided with a suction-side adapter penetration hole 61 d that penetrates the suction valve pressing adapter 61 in the press-insertion direction of the convex portion for suction valve pressing portion coupling 61b (the axial direction of the suction valve pressing and inserting portion 53) with respect to the concave portion for suction valve pressing portion coupling 60b. The suction-side adapter penetration hole 61d penetrates the suction-side adapter body 61 a and the suction valve pressing and coupling convex portion 61b. In the suction-side adapter penetration hole 61d, a portion extending from the front end surface of the convex portion for suction valve pressing portion coupling 61b to the intermediate portion of the suction valve pressing adapter 61 in the axial direction is provided with a female screw portion 61f. The space inside the suction-side adapter penetration hole 61d forms a part of the suction path 58.

The suction-side head sealing portion 19 is used to suppress the leakage of the hydrogen gas from the internal space 30 of the cylinder head 12 through the suction-side head opening 30e. The suction-side head sealing portion 19 includes a suction-side O-ring 64 and a suction-side backup ring 66. The suction-side O-ring 64 is an example of the valve pressing O-ring of the present invention, and the suction-side backup ring 66 is an example of the valve pressing backup ring of the present invention.

The suction-side O-ring 64 basically has the same configuration as that of the head O-ring 42, and the suction-side backup ring 66 basically has the same configuration as that of the head backup ring 44.

Specifically, the suction-side O-ring 64 is fitted to the outside of the suction valve pressing and inserting portion 53 while being attached into the suction valve pressing groove portion 56. The outer peripheral portion of the suction-side O-ring 64 contacts the inner surface of the head body 32 forming the suction-side fitting object portion 32b. The suction-side O-ring 64 seals a gap between the outer peripheral surface of the suction valve pressing and inserting portion 53 and the inner surface of the head body 32 forming the suction-side fitting object portion 32b so as to suppress the leakage of the hydrogen gas through the gap.

Further, the suction-side backup ring 66 is fitted to the outside of the suction valve pressing and inserting portion 53 while being disposed at the position on the suction-side head opening 30e side (near the suction valve pressing flange 52) with respect to the suction-side O-ring 64 inside the suction valve pressing groove portion 56. The suction-side backup ring 66 is used to suppress the movement of the suction-side O-ring 64 toward the suction-side head opening 30e. The suction-side backup ring 66 includes an end surface (an inner surface) 66a facing the side surface portion 56a inside the suction valve pressing groove portion 56, and the end surface 66a is formed in a tapered shape that increases in diameter as it goes toward the suction-side head opening 30e.

As illustrated in FIG. 2, the discharge valve pressing portion 20 presses the discharge valve 16 so that the discharge valve 16 does not slip off to the outside from the discharge-side fitting object portion 32d inside the cylinder head 12 through the discharge-side head opening 30f. The discharge valve pressing portion 20 has the same configuration as that of the suction valve pressing portion 18, and is disposed so as to be symmetrical with respect to the suction valve pressing portion 18 in the vertical direction.

The discharge valve pressing portion 20 includes a discharge valve pressing flange 68 that is the same as the suction valve pressing flange 52, a discharge valve pressing and inserting portion 70 that is the same as the suction valve pressing and inserting portion 53, and a discharge-side protrusion portion 72 that is the same as the suction-side protrusion portion 55. The discharge-side protrusion portion 72 is provided with the hydrogen gas discharge port 73. The inside of the discharge valve pressing flange 68 and the inside of the discharge valve pressing and inserting portion 70 are provided with a discharge path 74 connected to the discharge port 73. The structure of the discharge port 73 is the same as the structure of the suction port 57, and the structure of the discharge path 74 is the same as the structure of the suction path 58.

The discharge valve pressing flange 68 is fastened to the head body 32 by a fastening member (not illustrated) while the discharge valve pressing and inserting portion 70 is inserted into the discharge-side fitting object portion 32d through the discharge-side head opening 30f and the discharge valve 16 is interposed between the front end of the discharge valve pressing and inserting portion 70 and the step 32c. Accordingly, the discharge valve 16 is fixed to the inside of the discharge-side fitting object portion 32d, and the discharge valve pressing portion 20 is fixed to the head body 32.

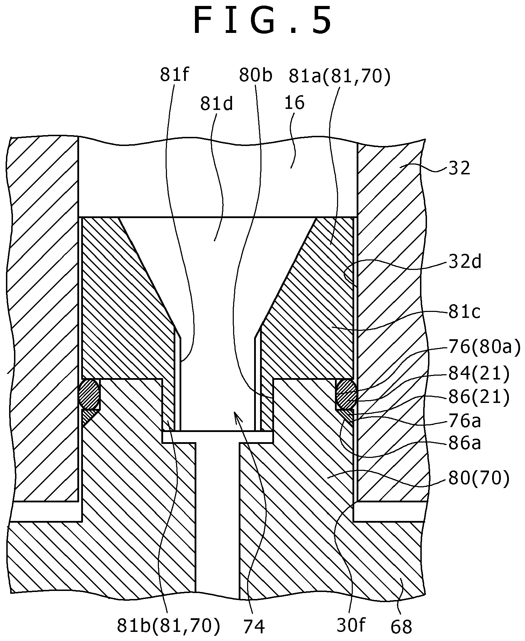

Further, as illustrated in FIG. 5, the outer peripheral surface of the discharge valve pressing and inserting portion 70 is provided with a discharge valve pressing groove portion 76 that is the same as the suction valve pressing groove portion 56. The inner surface of the discharge valve pressing groove portion 76 includes a tapered side surface portion 76a that is the same as the side surface portion 56a inside the suction valve pressing groove portion 56.

The discharge valve pressing and inserting portion 70 includes a discharge valve pressing and inserting body 80 that is the same as the suction valve pressing and inserting body 60, and a discharge valve pressing adapter 81 that is the same as the suction valve pressing adapter 61. Further, the discharge valve pressing and inserting body 80 is provided with a discharge valve pressing groove concave portion 80a that is the same as the concave portion for suction valve pressing groove 60a, and a discharge valve pressing portion coupling concave portion 80b that is the same as the concave portion for suction valve pressing portion coupling 60b.

The discharge valve pressing adapter 81 includes a discharge-side adapter body 81a that is the same as the suction-side adapter body 61 a, and a discharge valve pressing portion coupling convex portion 81b that is the same as the convex portion for suction valve pressing portion coupling 61b. When the discharge valve pressing portion coupling convex portion 81b is press-inserted into the discharge valve pressing portion coupling concave portion 80b, the discharge valve pressing adapter 81 is strongly coupled to the discharge valve pressing and inserting body 80. Further, the discharge-side adapter body 81a is provided with a discharge-side adapter outer peripheral portion 81c that is the same as the suction-side adapter outer peripheral portion 61c. Further, the discharge-side pressing adapter 81 is provided with a discharge-side adapter penetration hole 81 d that is the same as the suction-side adapter penetration hole 61 d. The inner surface of the discharge-side adapter penetration hole 81d is provided with a female screw portion 81 f that is the same as the female screw portion 61 f of the suction-side adapter penetration hole 61 d.

The discharge-side head sealing portion 21 is used to suppress the leakage of the hydrogen gas from the internal space 30 of the cylinder head 12 through the discharge-side head opening 30f. The discharge-side head sealing portion 21 has the same configuration as that of the suction-side head sealing portion 19 except that the discharge-side head sealing portion is disposed so as to be symmetrical to the suction-side head sealing portion 19 in the vertical direction. Specifically, the discharge-side head sealing portion 21 includes a discharge-side O-ring 84 that is the same as the suction-side O-ring 64, and a discharge-side backup ring 86 that is the same as the suction-side backup ring 66. The discharge-side O-ring 84 is an example of the valve pressing O-ring of the present invention, and the discharge-side backup ring 86 is an example of the valve pressing backup ring of the present invention.

The discharge-side O-ring 84 is attached into the discharge valve pressing groove portion 76 in the same manner such that the suction-side O-ring 84 is attached into the suction valve pressing groove portion 56. The discharge-side O-ring 84 seals a gap between the outer peripheral surface of the discharge valve pressing and inserting portion 70 and the inner surface of the head body 32 forming the discharge-side fitting object portion 32d so as to suppress the leakage of the hydrogen gas through the gap.

Further, the discharge-side backup ring 86 is disposed at the position on the discharge-side head opening 30f side with respect to the discharge-side O-ring 84 inside the discharge valve pressing groove portion 76 and suppresses the movement of the discharge-side O-ring 84 toward the discharge-side head opening 30f. Further, the discharge-side backup ring 86 includes an end surface (an inner surface) 86a facing the side surface portion 76a inside the discharge valve pressing groove portion 76, and the end surface 86a is formed in a tapered shape as in the end surface 66a of the suction-side backup ring 66.

In the compressor of this embodiment with such a configuration, the crank shaft 24 rotates about its axis when power is transmitted from a power transmission mechanism (not illustrated) to the crank shaft 24 (see FIG. 1). The rotational movement of the crank shaft 24 is converted into the linear reciprocating movement by the connecting rod 26 and the cross head 28, and the linear reciprocating movement is transmitted to the piston 2. Accordingly, the piston 2 moves in a reciprocating manner in the axial direction.

When the piston 2 moves toward the crank shaft 24, the hydrogen gas is suctioned into the head body 32 through the suction port 57 (see FIG. 2) and the suction path 58, passes through the suction valve 14, and is introduced into the compression chamber 4b through the communication path 30a. The hydrogen gas that is introduced into the compression chamber 4b is compressed to an extreme pressure in a manner such that the piston 2 moves toward the front end of the cylinder 4 (toward the cylinder head 12). The compressed hydrogen gas passes from the compression chamber 4b through the communication path 30a and then through the discharge valve 16, and is discharged to the outside through the discharge path 74 and the discharge port 73.

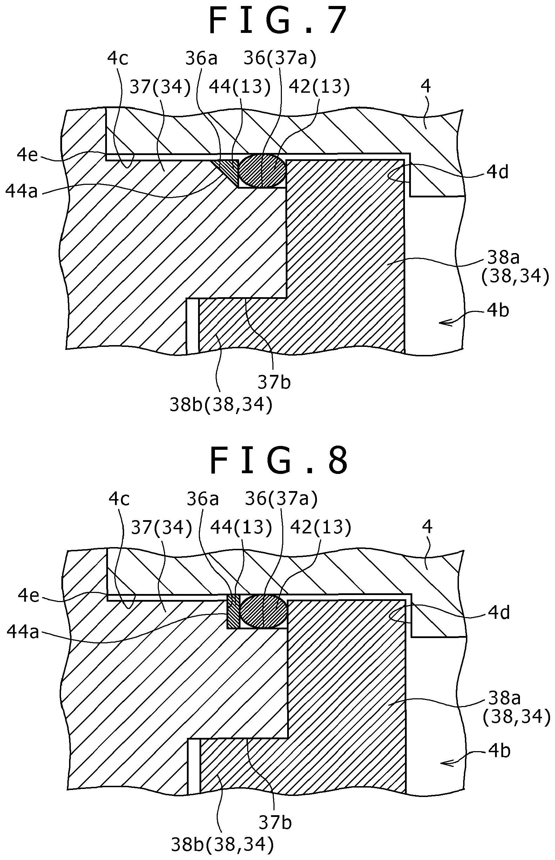

Since the pressure of the compression chamber 4b becomes an extreme pressure when the hydrogen gas is compressed and a large pressure difference occurs between the compression chamber 4b and the external space, a force acting toward the cylinder opening 4e is exerted on the head O-ring 42 (see FIG. 3) and the head backup ring 44. At this time, the tapered end surface 44a of the head backup ring 44 is pressed by the tapered side surface portion 36a inside the head groove portion 36, so that the head backup ring 44 is slightly widened outward in the radial direction along the side surface portion 36a. Accordingly, as illustrated in FIG. 7, the head backup ring 44 blocks a minute gap between a portion located on the cylinder opening 4e side with respect to the head groove portion 36 in the outer peripheral surface of the head inserting portion 34 and the inner surface of the cylinder 4 forming the cylinder fitting object portion 4c. At the same time, the head backup ring 44 suppresses the movement of the head O-ring 42 toward the cylinder opening 4e. As a result, it is possible to suppress the head O-ring 42 from being deformed to enter the gap between the portion located on the cylinder opening 4e side with respect to the head groove portion 36 in the outer peripheral surface of the head inserting portion 34 and the inner surface of the cylinder 4 forming the cylinder fitting object portion 4c. For this reason, in this embodiment, the damage of the head O-ring 42 may be prevented. As a result, the leakage of the hydrogen gas from the compression chamber 4b caused by the damage of the head O-ring 42 may be prevented.

Further, since the pressure of the internal space 30 of the cylinder head 12 connected to the compression chamber 4b also becomes a high pressure when the hydrogen gas is compressed, a force acting toward the suction-side head opening 30e is exerted on the suction-side O-ring 64 (see FIG. 4) and the suction-side backup ring 66, and a force acting toward the discharge-side head opening 30f is exerted on the discharge-side O-ring 84 (see FIG. 5) and the discharge-side backup ring 86. At this time, the tapered end surface 66a (see FIG. 4) of the suction-side backup ring 66 is pressed by the tapered side surface portion 56a of the suction valve pressing groove portion 56 so that the suction-side backup ring 66 is slightly widened outward in the radial direction. At the same time, the tapered end surface 86a (see FIG. 5) of the discharge-side backup ring 86 is pressed by the tapered side surface portion 76a of the discharge valve pressing groove portion 76 so that the discharge-side backup ring 86 is slightly widened outward in the radial direction. As a result, as in the case of the head O-ring 42, it is possible to suppress the suction-side O-ring 64 from being deformed to enter the minute gap between the portion located on the suction-side head opening 30e side with respect to the suction valve pressing groove portion 56 in the outer peripheral surface of the suction valve pressing and inserting portion 53 and the inner surface of the head body 32 forming the suction-side fitting object portion 32b. At the same time, it is possible to suppress the discharge-side O-ring 84 from being deformed to enter the minute gap between the portion located on the discharge-side head opening 30f side with respect to the discharge valve pressing groove portion 76 in the outer peripheral surface of the discharge valve pressing and inserting portion 70 and the inner surface of the head body 32 forming the discharge-side fitting object portion 32d. For this reason, in this embodiment, it is possible to prevent the damage of the suction-side O-ring 64 and the discharge-side O-ring 84. As a result, it is possible to prevent the leakage of the hydrogen gas from the internal space 30 of the cylinder head 12 caused by the damage of the suction-side O-ring 64 and the discharge-side O-ring 84.

Further, in this embodiment, since the step 4d (see FIG. 2) is formed between the inner surface forming the cylinder fitting object portion 4c in the front end of the cylinder 4 and the inner surface forming the compression chamber 4b, the step 4d may suppress a problem in which the head adapter 38 is separated from the head inserting body 37 and enters the compression chamber 4b when the piston 2 is retracted toward the crank shaft 24 (see FIG. 1) so that the pressure of the compression chamber 4b becomes a low pressure.

Further, in this embodiment, when the suction-side O-ring 64 (see FIG. 4) and the suction-side backup ring 66 are attached into the suction valve pressing groove portion 56, the suction-side backup ring 66 and the suction-side O-ring 64 are attached to the concave portion for suction valve pressing groove 60a from the front end side of the suction valve pressing and inserting body 60 while the suction valve pressing adapter 61 is separated from the suction valve pressing and inserting body 60. Subsequently, the convex portion for suction valve pressing portion coupling 61b is press-inserted into the concave portion for suction valve pressing portion coupling 60b so that the suction valve pressing and inserting body 60 is coupled to the suction valve pressing adapter 61. The inner diameter of the suction-side O-ring 64 and the inner diameter of the suction-side backup ring 66 are smaller than the outer diameter of the suction-side adapter outer peripheral portion 61c. However, according to this embodiment, the suction-side O-ring 64 and the suction-side backup ring 66 may be easily attached into the suction valve pressing groove portion 56 without extending the suction-side O-ring 64 and the suction-side backup ring 66 outward in the radial direction.

Further, in this embodiment, as in the case of the suction-side O-ring 64 and the suction-side backup ring 66, the discharge-side O-ring 84 (see FIG. 5) and the discharge-side backup ring 86 are attached to the discharge valve pressing groove portion 76, and the head O-ring 42 (see FIG. 3) and the head backup ring 44 are attached to the head groove portion 36. For this reason, the discharge-side O-ring 84 and the discharge-side backup ring 86 may be easily attached to the discharge valve pressing groove portion 76, and the head O-ring 42 and the head backup ring 44 may be easily attached to the head groove portion 36.

Further, in this embodiment, since the suction valve pressing and inserting body 60 (see FIG. 4) and the suction valve pressing adapter 61 are strongly coupled to each other by press-inserting the convex portion for suction valve pressing portion coupling 61b into the concave portion for suction valve pressing portion coupling 60b, it is possible to prevent the suction valve pressing adapter 61 from being separated from the suction valve pressing and inserting body 60 in the state before the suction valve pressing and inserting portion 53 is inserted into the suction-side fitting object portion 32b. For the same reason, it is possible to prevent the discharge valve pressing and inserting body 80 from being separated from the discharge valve pressing adapter 81 in the state before the discharge valve pressing and inserting portion 70 (see FIG. 5) is inserted into the discharge-side fitting object portion 32d, and to prevent the head inserting body 37 from being separated from the head adapter 38 in the state before the head inserting portion 34 (see FIG. 3) is inserted into the cylinder fitting object portion 4c.

Further, in this embodiment, when the replacement and the maintenance of the suction-side O-ring 64 (see FIG. 4) and the suction-side backup ring 66 are performed, the suction valve pressing portion 18 (see FIG. 2) is separated from the head body 32, the suction valve pressing adapter 61 is separated from the suction valve pressing and inserting body 60 (see FIG. 4), and then the suction-side O-ring 64 and the suction-side backup ring 66 are separated from the concave portion for suction valve pressing groove 60a. Since the suction valve pressing and inserting body 60 and the suction valve pressing adapter 61 are strongly coupled to each other by press-inserting the convex portion for suction valve pressing portion coupling 61b into the concave portion for suction valve pressing portion coupling 60b, it is difficult to separate the suction valve pressing adapter 61 from the suction valve pressing and inserting body 60 just by holding and pulling the suction valve pressing and inserting body. Therefore, in this embodiment, a separation bolt is threaded into the female screw portion 61f of the suction-side adapter penetration hole 61d from the front end side of the suction valve pressing and inserting portion 53, and the bolt is further threaded after the front end of the bolt collides with the suction valve pressing and inserting body 60, thereby separating the suction valve pressing adapter 61 from the valve pressing insertion body 60. For this reason, the maintenance or the replacement of the suction-side O-ring 64 and the suction-side backup ring 66 may be easily performed by easily separating the suction valve pressing adapter 61 from the suction valve pressing and inserting body 60 even when the suction valve pressing and inserting body 60 and the suction valve pressing adapter 61 are strongly coupled to each other.

Further, in this embodiment, the replacement and the maintenance of the discharge-side O-ring 84 (see FIG. 5) and the discharge-side backup ring 86 and the replacement and the maintenance of the head O-ring 42 (see FIG. 3) and the head backup ring 44 may be performed as in the case of the suction-side O-ring 64 and the suction-side backup ring 66. For this reason, the maintenance or the replacement of the discharge-side O-ring 84 and the discharge-side backup ring 86 may be performed by easily separating the discharge valve pressing adapter 81 from the discharge valve pressing and inserting body 80 even when the discharge valve pressing and inserting body 80 and the suction valve pressing adapter 81 are strongly coupled to each other. Further, the maintenance or the replacement of the head O-ring 42 and the head backup ring 44 may be performed by easily separating the head adapter 38 from the head inserting body 37 even when the head inserting body 37 and the head adapter 38 are strongly coupled to each other.

Further, in this embodiment, since the space inside the suction-side adapter penetration hole 61d (see FIG. 4) is used as a part of the hydrogen gas suction path 58, it is possible to prevent an increase in the size of the suction valve pressing adapter 61 and to simplify the manufacturing process of the suction valve pressing adapter 61 compared to the case where the penetration hole 61d is formed in the suction valve pressing adapter 61 so as to be separated from the suction path 58. Similarly, since the space inside the discharge-side adapter penetration hole 81d (see FIG. 5) is used as a part of the hydrogen gas discharge path 74, it is possible to prevent an increase in the size of the discharge valve pressing adapter 61 and to simplify the manufacturing process of the discharge valve pressing adapter 61 compared to the case where the penetration hole 81d is formed in the discharge valve pressing adapter 61 so as to be separated from the discharge path 74. Further, since the space inside the head adapter penetration hole 38d (see FIG. 3) is used as a part of the communication path 30a for supplying the hydrogen gas to the compression chamber 4b, it is possible to prevent an increase in the size of the head adapter 38 and to simplify the manufacturing process of the head adapter 38 compared to the case where the penetration hole 38d is formed in the head adapter 38 so as to be separated from the communication path 30a.

In the compressor of this embodiment, since there is no need to process the O-rings 42, 64, and 84 in accordance with the shape of the peripheral member, the commercial O-rings may be used.

Furthermore, it should be understood that the embodiment disclosed herein is merely an example and does not limit the present invention.

For example, in the above-described embodiment, the compressor compressing the hydrogen gas has been exemplified, but the present invention may be also applied to a compressor that compresses a gas other than the hydrogen gas.

Further, the configurations of the head inserting portion and the cylinder sealing portion of the above-described embodiment may be omitted. For example, in a case where the groove portion cylinder head and the front end of the cylinder are integrally formed with each other, the head inserting portion and the cylinder sealing portion are not needed and hence may be omitted.

Further, the tapered side surface portion inside each groove portion and the tapered end surface of each backup ring may be formed in the other shape. For example, as in the modified example illustrated in FIG. 8, the side surface portion 36a of the cylinder opening 4e side inside the head groove portion 36 and the end surface 44a facing the side surface portion 36a in the head backup ring 44 may be formed in a plane perpendicular to the axial direction of the head inserting portion 34 (the axial direction of the cylinder 4). Similarly, the side surface portion of the suction-side head opening side inside the suction valve pressing groove portion and the end surface of the suction-side backup ring facing the side surface portion may be formed in a plane perpendicular to the axial direction of the suction valve pressing and inserting portion. Further, the side surface portion of the discharge-side head opening side inside the discharge valve pressing groove portion and the end surface of the discharge-side backup ring facing the side surface portion may be formed in a plane perpendicular to the axial direction of the discharge valve pressing and inserting portion.

Further, the female screw portion may be formed throughout the suction-side adapter penetration hole and the discharge-side adapter penetration hole in the axial direction. Further, the female screw portion may be partially formed in the head adapter penetration hole in the axial direction.

Further, the method of coupling the suction valve pressing and inserting body to the suction valve pressing adapter, the method of coupling the discharge valve pressing and inserting body to the discharge valve pressing adapter, and the method of coupling the head inserting body to the head adapter are not limited to the above-described press-inserting. For example, a configuration may be employed in which the male screw is formed in one convex portion of each insertion body and each corresponding adapter, the female screw is formed in the other concave portion, and the male screw of the convex portion is threaded into the female screw of the concave portion so that each insertion body is coupled to each corresponding adapter. Further, each insertion body and each corresponding adapter may be disposed inside the corresponding fitting object portion while simply abutting against each other in the axial direction of the insertion portion without being fixed to each other.

In order to prevent the leakage of a gas from an internal space communicating with a compression chamber inside a cylinder in a cylinder head of a compressor, the compressor includes a suction valve pressing portion that presses a suction valve so that the suction valve provided in the internal space of the cylinder head dos not slip off through a suction-side head opening, the suction valve pressing portion includes a suction valve pressing and inserting portion that is inserted into the cylinder head through the suction-side head opening, the outer peripheral surface of the suction valve pressing and inserting portion is provided with an annular suction valve pressing groove portion, a suction-side O-ring is attached into the suction valve pressing groove portion, and a suction-side backup ring that suppresses the movement of the suction-side O-ring toward the suction-side head opening is disposed at a position near the suction-side head opening of the suction-side O-ring inside the suction valve pressing groove portion.

## Claims

1. A compressor that compresses a gas comprising:
a cylinder (4) that has a gas introduction compression chamber (4b) formed inside a front end thereof;
a piston (2) that is inserted into the cylinder (4) and compresses a gas introduced into the compression chamber (4b);
a cylinder head (12) that is attached to the front end of the cylinder (4) and includes an internal space (30) communicating with the compression chamber (4b);
a check valve (14, 16) that is provided in the internal space (30) of the cylinder head (12);
a valve pressing portion (18, 20) that presses the check valve (14, 16) so that the check valve (14, 16) does not slip off through an opening of the cylinder head (12) connected to the internal space (30); and
a head sealing portion that suppresses the leakage of the gas from the internal space (30) of the cylinder head (12),
wherein the valve pressing portion (18, 20) includes a valve pressing insertion portion (53, 70) that is inserted into the internal space (30) of the cylinder head (12) through the opening of the cylinder head (12),
wherein an annular valve pressing groove portion (56, 76) is formed in an outer peripheral surface of the valve pressing insertion portion (53, 70), and
wherein the head sealing portion includes a valve pressing O-ring (64, 84) that is attached into the valve pressing groove portion (56, 76) and seals a gap between the valve pressing insertion portion (53, 70) and an inner surface forming the internal space (30) in the cylinder head (12),
**characterized by**
a valve pressing backup ring (66, 86) that is disposed at a position on the side of the opening with respect to the valve pressing O-ring (64, 84) inside the valve pressing groove portion (56, 76) and suppresses the movement of the valve pressing O-ring (64, 84) toward the opening
wherein the valve pressing insertion portion (53, 70) includes a valve pressing insertion body (60, 80) in which an annular valve pressing groove concave portion (60a, 80a) is formed in an outer peripheral surface of a front end thereof and a valve pressing adapter (61, 81) which is separably coupled to the front end of the valve pressing insertion body (60, 80), and
wherein the valve pressing adapter (61, 81) includes a valve pressing adapter outer peripheral portion that forms the valve pressing groove portion (56, 76) by covering the valve pressing groove concave portion from the front end side of the valve pressing insertion body (60, 80) while the valve pressing adapter (61, 81) is coupled to the front end of the valve pressing insertion body (60, 80).

2. The compressor according to claim 1,
wherein a side surface portion located on the side of the opening of the cylinder head (12) in an inner surface of the valve pressing groove portion (56, 76) and an end surface of the valve pressing backup ring (68, 86) facing the side surface portion are all formed in a tapered shape that increase in diameter as it goes toward the opening of the cylinder head (12).

3. The compressor according to claim 1,
wherein one of the valve pressing insertion body (60, 80) and the valve pressing adapter (61, 81) includes a valve pressing and coupling concave portion, and the other of the valve pressing insertion body (60, 80) and the valve pressing adapter (61, 81) includes a valve pressing and coupling convex portion that is press-inserted into the valve pressing and coupling concave portion.

4. The compressor according to claim 3,
wherein the valve pressing adapter (61, 81) includes a valve pressing adapter penetration hole that penetrates the valve pressing adapter (61, 81) in the press-insertion direction of the valve pressing and coupling convex portion with respect to the valve pressing and coupling concave portion, and
wherein at least a part of the valve pressing adapter penetration hole is provided with a female screw portion.

5. The compressor according to claim 4,
wherein a space inside the valve pressing adapter penetration hole forms a part of a gas circulation path connected to the compression chamber (4b).

6. The compressor according to claim 1,
wherein the front end of the cylinder (4) is provided with a cylinder opening,
wherein the compressor further comprises a cylinder sealing portion that suppresses the leakage of the gas from the compression chamber (4b),
wherein the cylinder head (12) includes a head inserting portion that is inserted into the cylinder (4) through the cylinder opening,
wherein an annular head groove portion is formed in an outer peripheral surface of the head inserting portion, and
wherein the cylinder sealing portion includes a head O-ring that is attached into the head groove portion and seals a gap between the head inserting portion and an inner surface forming a space for inserting the head inserting portion in the cylinder (4), and a head backup ring that is disposed at a position on the side of the cylinder opening with respect to the head O-ring inside the head groove portion and suppresses the movement of the head O-ring toward the cylinder opening.

7. The compressor according to claim 6,
wherein a side surface portion located on the side of the cylinder opening in an inner surface of the head groove portion and an end surface of the head backup ring facing the side surface portion are all formed in a tapered shape that increases in diameter as it goes toward the cylinder opening.

8. The compressor according to claim 6,
wherein the head inserting portion includes a head inserting body in which an annular head groove concave portion is formed in an outer peripheral surface of a front end thereof and a head adapter which is separably coupled to the front end of the head inserting body, and
wherein the head adapter includes a head adapter outer peripheral portion that forms the head groove portion by covering the head groove concave portion from the front end side of the head inserting body while the head adapter is coupled to the front end of the head inserting body.

9. The compressor according to claim 8,
wherein the outer diameter of the head adapter and an inner diameter of a head adapter insertion portion of the cylinder (4) are larger than the inner diameter of the compression chamber (4b).

10. The compressor according to claim 8,
wherein one of the head inserting body and the head adapter includes a head coupling concave portion, and the other of the head inserting body and the head adapter includes a head coupling convex portion that is press-inserted into the head coupling concave portion.

11. The compressor according to claim 10,
wherein the head adapter includes a head adapter penetration hole that penetrates the head adapter in the press-insertion direction of the head coupling convex portion with respect to the head coupling concave portion, and
wherein at least a part of the head adapter penetration hole is provided with a female screw portion.

12. The compressor according to claim 11,
wherein a space inside the head adapter penetration hole forms a part of a gas circulation path connected to the compression chamber (4b).

## Patentansprüche

1. Verdichter, der ein Gas verdichtet, mit:
einem Zylinder (4), der eine Gaseinbringungsverdichterkammer (4b) aufweist, die innerhalb eines vorderen Endes davon ausgebildet ist;
einem Kolben (2) der in den Zylinder (4) eingefügt ist und ein in die Verdichtungskammer (4b) eingebrachtes Gas verdichtet;
einem Zylinderkopf (12), der an dem vorderen Ende des Zylinders (4) angebracht ist und einen Innenraum (30) hat, der mit der Verdichtungskammer (4b) in Verbindung ist;
einem Sperrventil (14, 16), das in dem Innenraum (30) des Zylinderkopfs (12) bereitgestellt ist;
einem Ventildrückabschnitt (18, 20), der das Sperrventil (14, 16) so drückt, dass das Sperrventil (14, 16) nicht durch eine Öffnung des Zylinderkopfs (12) abrutscht, die mit dem Innenraum (30) verbunden ist; und
einem Kopfdichtabschnitt, der das Ausströmen des Gases von dem Innenraum (30) des Zylinderkopfs (12) unterdrückt,
wobei der Ventildrückabschnitt (18, 20) einen Ventildrückeinfügeabschnitt (53, 70) hat, der in den Innenraum (30) des Zylinderkopfs (12) durch die Öffnung des Zylinderkopfs (12) eingefügt ist,
wobei ein ringförmiger Ventildrücknutabschnitt (56, 76) in einer äußeren Randoberfläche des Ventildrückeinfügeabschnitts (53, 70) ausgebildet ist, und
wobei der Kopfdichtabschnitt einen Ventildrück-O-Ring (64, 84) hat, der in den Ventildrücknutabschnitt (56, 76) angebracht ist und einen Spalt zwischen dem Ventildrückeinfügeabschnitt (53, 70) und einer inneren Oberfläche, die den Innenraum (30) in dem Zylinderkopf (12) ausbildet, abdichtet,
**gekennzeichnet durch**
einen Ventildrücksicherungsring (66, 86), der an einer Position an der Seite der Öffnung mit Bezug auf den Ventildrück-O-Ring (64, 84) innerhalb des Ventildrücknutabschnitts (56, 76) vorgesehen ist, und eine Bewegung des Ventildrück-O-Rings (64, 84) zu der Öffnung unterdrückt, wobei der Ventildrückeinfügeabschnitt (53, 70) einen Ventildrückeinfügekörper (60, 80) hat, in dem ein ringförmiger Ventildrücknutkonkavabschnitt (60a, 80a) in einer äußeren Randoberfläche eines vorderen Endes davon ausgebildet ist, und einen Ventildrückadapter (61, 81), der trennbar an das vordere Ende des Ventildrückeinfügekörpers (60, 80) gekoppelt ist, und
wobei der Ventildrückadapter (61, 81) einen Ventildrückadapteraußenrandabschnitt hat, der den Ventildrücknutabschnitt (56, 76) ausbildet, indem er den Ventildrücknutkonkavabschnitt von der vorderen Endseite des Ventildrückeinfügekörpers (60, 80) bewegt, während der Ventildrückadapter (61, 81) mit dem vorderen Ende des Ventildrückeinfügekörpers (60, 80) gekoppelt ist.

2. Verdichter nach Anspruch 1,
wobei ein Seitenoberflächenabschnitt, der an der Seite der Öffnung des Zylinderkopfs (12) in einer inneren Oberfläche des Ventildrücknutabschnitts (56, 76) angeordnet ist und eine Endoberfläche des Ventildrücksicherungsrings (68, 86), der zu dem Seitenoberflächenabschnitt gerichtet ist, alle in einer konischen Form ausgebildet sind, die ihren Durchmesser zu der Öffnung des Zylinderkopfes (12) hin erhöht.

3. Verdichter nach Anspruch 1,
wobei eines aus Ventildrückeinfügekörper (60, 80) und dem Ventildrückadapter (61, 81) einen Ventildrück- und Kopplungskonkavabschnitt hat, und das andere aus Ventildrückeinfügekörper (60, 80) und dem Ventildrückadapter (61, 81) einen Ventildrück- und Kopplungskonvexabschnitt hat, der mittels Pressen in den Ventildrück- und Kopplungskonkavabschnitt eingefügt ist.

4. Verdichter nach Anspruch 3,
wobei der Ventildrückadapter (61, 81) eine Ventildrückadapterdurchdringungsbohrung hat, die den Ventildrückadapter (61, 81) in der Presseinfügerichtung des Ventilpress- und Kopplungskonvexabschnitts mit Bezug auf den Ventilpress- und Kopplungskonkavabschnitt durchdringt, und
wobei zumindest ein Teil der Ventilpressadapterdurchdringungsbohrung mit einem Innengewindeschraubenabschnitt bereitgestellt ist.

5. Verdichter nach Anspruch 4,
wobei ein Raum innerhalb der Ventildrückadapterdurchdringungsbohrung einen Teil eines Gaszirkulationspfads ausbildet, der mit der Verdichtungskammer (4b) verbunden ist.

6. Verdichter nach Anspruch 1,
wobei das vordere Ende des Zylinders (4) mit einer Zylinderöffnung bereitgestellt ist,
wobei der Verdichter außerdem einen Zylinderdichtabschnitt hat, der das Ausströmen des Gases von der Verdichtungskammer (4b) unterdrückt,
wobei der Zylinderkopf (12) einen Kopfeinfügeabschnitt hat, der in dem Zylinder (4) durch die Zylinderöffnung eingefügt ist,
wobei ein ringförmiger Kopfnutabschnitt in einer äußeren Randoberfläche des Kopfeinfügeabschnitts ausgebildet ist, und
wobei der Zylinderdichtabschnitt einen Kopf-O-Ring hat, der in dem Kopfnutabschnitt angebracht ist und einen Spalt zwischen den Kopfeinfügeabschnitt und einer inneren Oberfläche abdichtet, die einen Raum zum Einfügen des Kopfeinfügeabschnitts in den Zylinder (4) ausbildet, und einen Kopfsicherungsring, der an einer Position der Seite der Zylinderöffnung mit Bezug auf den Kopf-O-Ring innerhalb des Kopfnutabschnitts vorgesehen ist und die Bewegung des Kopf-O-Rings zu der Zylinderöffnung unterdrückt.

7. Verdichter nach Anspruch 6,
wobei ein Seitenoberflächenabschnitt, der an der Seite der Zylinderöffnung in einer inneren Oberfläche des Kopfnutabschnitts angeordnet ist und eine Endoberfläche des Kopfsicherungsrings, der zu dem Seitenoberflächenabschnitt gerichtet ist, alle in einer konischen Form ausgebildet sind, die sich im Durchmesser, er zu der Zylinderöffnung hin erhöht.

8. Verdichter nach Anspruch 6,
wobei der Kopfeinfügeabschnitt einen Kopfeinfügekörper hat, in dem ein ringförmiger Kopfnutkonkavabschnitt in einer äußeren Randoberfläche eines vorderen Endes davon ausgebildet ist, und einen Kopfadapter, der trennbar mit dem vorderen Ende des Kopfeinfügeabschnitts gekoppelt ist, und
wobei der Kopfadapter einen Kopfadapteraußenrandabschnitt hat, der den Kopfnutabschnitt durch Bedecken des Kopfnutkonkavabschnitts von der vorderen Endseite des Kopfeinfügekörpers ausbildet, während der Kopfadapter mit dem vorderen Ende des Kopfeinfügekörpers gekoppelt ist.

9. Verdichter nach Anspruch 8,
wobei der Außendurchmesser des Kopfadapters und ein Innendurchmesser eines Kopfadaptereinfügeabschnitts des Zylinders (4) größer als der Innendurchmesser der Verdichtungskammer (4b) sind.

10. Verdichter nach Anspruch 8,
wobei eine aus dem Kopfeinfügekörper und dem Kopfadapter einen Kopfkopplungskonkavabschnitt hat, und der andere aus dem Kopfeinfügekörper und dem Kopfadapter einen Kopfkopplungskonvexabschnitt hat, der mittels Pressung in den Kopfkopplungskonkavabschnitt eingefügt ist.

11. Verdichter nach Anspruch 10,
wobei der Kopfadapter eine Kopfadapterdurchdringungsbohrung hat, die den Kopfadapter in der Presseinfügerichtung des Kopfkopplungskonvexabschnitts mit Bezug auf den Kopfkopplungskonkavabschnitt durchdringt, und
wobei zumindest ein Teil der Kopfadapterdurchdringungsbohrung mit einem Innengewindeschraubenabschnitt bereitgestellt ist.

12. Verdichter nach Anspruch 11,
wobei ein Raum innerhalb der Kopfadapterdurchdringungsbohrung einen Teil eines Gaszirkulationspfads ausbildet, der mit der Verdichtungskammer (4b) verbunden ist.

## Revendications

1. Compresseur qui comprime un gaz, comprenant :
un cylindre (4) qui a une chambre de compression d'introduction de gaz (4b) formée à l'intérieur de son extrémité avant ;
un piston (2) qui est inséré dans le cylindre (4) et comprime un gaz introduit dans la chambre de compression (4b) ;
une culasse (12) qui est fixée à l'extrémité avant du cylindre (4) et comprend un espace interne (30) communiquant avec la chambre de compression (4b) ;
une soupape de non-retour (14, 16) qui est prévue dans l'espace interne (30) de la culasse (12) ;
une partie de pression de soupape (18, 20) qui appuie sur la soupape de non-retour (14, 16) de sorte que la soupape de non-retour (14, 16) ne glisse pas à travers une ouverture de la culasse (12) raccordée à l'espace interne (30) ; et
une partie d'étanchéité de tête qui supprime la fuite du gaz par l'espace interne (30) de la culasse (12),
dans lequel la partie de pression de soupape (18, 20) comprend une partie d'insertion de pression de soupape (53, 70) qui est insérée dans l'espace interne (30) de la culasse (12) par l'ouverture de la culasse (12),
dans lequel une partie de rainure de pression de soupape annulaire (56, 76) est formée dans une surface périphérique externe de la partie d'insertion de pression de soupape (53, 70), et
dans lequel la partie d'étanchéité de tête comprend un joint torique de pression de soupape (64, 84) qui est fixé dans la partie de rainure de pression de soupape (56, 76) et réalise l'étanchéité d'un espace entre la partie d'insertion de pression de soupape (53, 70) et une surface interne formant l'espace interne (30) dans la culasse (12),
**caractérisé par** :
une bague d'appui de pression de soupape (66, 86) qui est disposée dans une position du côté de l'ouverture par rapport au joint torique de pression de soupape (64, 84) à l'intérieur de la partie de rainure de pression de soupape (56, 76) et supprime le mouvement du joint torique de pression de soupape (64, 84) vers l'ouverture,
dans lequel la partie d'insertion de pression de soupape (53, 70) comprend un corps d'insertion de pression de soupape (60, 80) dans lequel la partie concave de rainure de pression de soupape annulaire (60a, 80a) est formée dans une surface périphérique externe de son extrémité avant et un adaptateur de pression de soupape (61, 81) qui est couplé de manière séparable à l'extrémité avant du corps d'insertion de pression de soupape (60, 80), et
dans lequel l'adaptateur de pression de soupape (61, 81) comprend une partie périphérique externe d'adaptateur de pression de soupape qui forme la partie de rainure de pression de soupape (56, 76) en recouvrant la partie concave de rainure de pression de soupape à partir du côté d'extrémité avant du corps d'insertion de pression de soupape (60, 80) alors que l'adaptateur de pression de soupape (61, 81) est couplé à l'extrémité avant du corps d'insertion de pression de soupape (60, 80).

2. Compresseur selon la revendication 1,
dans lequel une partie de surface latérale positionnée du côté de l'ouverture de la culasse (12) dans une surface interne de la partie de rainure de pression de soupape (56, 76) et une surface d'extrémité de la bague d'appui de pression de soupape (68, 86) faisant face à la partie de surface latérale sont toutes formées selon une forme progressivement rétrécie qui augmente du point de vue du diamètre au fur et à mesure qu'elle se rapproche de l'ouverture de la culasse (12).

3. Compresseur selon la revendication 1,
dans lequel l'un parmi le corps d'insertion de pression de soupape (60, 80) et l'adaptateur de pression de soupape (61, 81) comprend une partie concave de couplage et de pression de soupape et l'autre parmi le corps d'insertion de pression de soupape (60, 80) et l'adaptateur de pression de soupape (61, 81) comprend une partie convexe de couplage et de pression de soupape qui est insérée à la presse dans la partie concave de couplage et de pression de soupape.

4. Compresseur selon la revendication 3,
dans lequel l'adaptateur de pression de soupape (61, 81) comprend un trou de pénétration d'adaptateur de pression de soupape qui pénètre dans l'adaptateur de pression de soupape (61, 81) dans la direction de l'insertion à la pression de la partie convexe de couplage et de pression de soupape par rapport à la partie concave de couplage et de pression de soupape, et
dans lequel au moins une partie du trou de pénétration d'adaptateur de pression de soupape est prévue avec une partie de vis femelle.

5. Compresseur selon la revendication 4,
dans lequel un espace à l'intérieur du trou de pénétration d'adaptateur de pression de soupape forme une partie d'une trajectoire de circulation de gaz raccordée à la chambre de compression (4b).

6. Compresseur selon la revendication 1,
dans lequel l'extrémité avant du cylindre (4) est prévue avec une ouverture de cylindre,
dans lequel le compresseur comprend en outre une partie d'étanchéité de cylindre qui supprime la fuite du gaz par la chambre de compression (4b),
dans lequel la culasse (12) comprend une partie d'insertion de tête qui est insérée dans le cylindre (4) par l'ouverture de cylindre,
dans lequel la partie de rainure de tête annulaire est formée dans une surface périphérique externe de la partie d'insertion de tête, et
dans lequel la partie d'étanchéité de cylindre comprend un joint torique de tête qui est fixé dans la partie de rainure de tête et réalise l'étanchéité d'un espace entre la partie d'insertion de tête et une surface interne formant un espace pour insérer la partie d'insertion de tête dans le cylindre (4) et une bague d'appui de tête qui est disposée dans une position du côté de l'ouverture de cylindre par rapport au joint torique de tête à l'intérieur de la partie de rainure de tête et supprime le mouvement du joint torique de tête vers l'ouverture de cylindre.

7. Compresseur selon la revendication 6,
dans lequel une partie de surface latérale positionnée du côté de l'ouverture de cylindre dans une surface interne de la partie de rainure de tête et une surface d'extrémité de la bague d'appui de tête faisant face à la partie de surface latérale sont toutes formées selon une forme progressivement rétrécie qui augmente du point de vue du diamètre au fur et à mesure qu'elle se rapproche de l'ouverture de cylindre.

8. Compresseur selon la revendication 6,
dans lequel la partie d'insertion de tête comprend un corps d'insertion de tête dans lequel une partie concave de rainure de tête annulaire est formée dans une surface périphérique externe de son extrémité avant et un adaptateur de tête qui est couplé de manière séparable à l'extrémité avant du corps d'insertion de tête, et
dans lequel l'adaptateur de tête comprend une partie périphérique externe d'adaptateur de tête qui forme la partie de rainure de tête en recouvrant la partie concave de rainure de tête à partir du côté d'extrémité avant du corps d'insertion de tête alors que l'adaptateur de tête est couplé à l'extrémité avant du corps d'insertion de tête.

9. Compresseur selon la revendication 8,
dans lequel le diamètre externe de l'adaptateur de tête et un diamètre interne d'une partie d'insertion d'adaptateur de tête du cylindre (4) sont plus grands que le diamètre interne de la chambre de compression (4b).

10. Compresseur selon la revendication 8,
dans lequel l'un parmi le corps d'insertion de tête et l'adaptateur de tête comprend une partie concave de couplage de tête et l'autre parmi le corps d'insertion de tête et l'adaptateur de tête comprend une partie convexe de couplage de tête qui est insérée à la presse dans la partie concave de couplage de tête.

11. Compresseur selon la revendication 10,
dans lequel l'adaptateur de tête comprend un trou de pénétration d'adaptateur de tête qui pénètre dans l'adaptateur de tête dans la direction de l'insertion à la presse de la partie convexe de couplage de tête par rapport à la partie concave de couplage de tête, et
dans lequel au moins une partie du trou de pénétration d'adaptateur de tête est prévue avec une partie de vis femelle.

12. Compresseur selon la revendication 11,
dans lequel un espace à l'intérieur du trou de pénétration d'adaptateur de tête forme une partie d'une trajectoire de circulation de gaz raccordée à la chambre de compression (4b).
